(19) Europäisches Patentamt
European Patent Office
Office européen des brevets

(11) **EP 3 508 971 A1**

(12) **EUROPEAN PATENT APPLICATION**

(43) Date of publication:
**10.07.2019 Bulletin 2019/28**

(51) Int Cl.:
***G06F 3/12*** *(2006.01)*     ***B65H 31/30*** *(2006.01)*

(21) Application number: **18150676.7**

(22) Date of filing: **09.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **OCE Holding B.V.**
**5914 CA Venlo (NL)**

(72) Inventor: **Blasiak, Daniel B.**
**5914 CA Venlo (NL)**

(74) Representative: **OCE IP Department**
**St. Urbanusweg 43**
**5914 CA Venlo (NL)**

(54) **A METHOD OF FORMING A STACKING INSTRUCTION**

(57)     A method of forming a stacking instruction (16) for a process in which a plurality of units (10), each of which has at least two opposite surfaces that are parallel to each other, are stacked one upon the other, and wherein a position on a base plane (12) is assigned to each unit (10), the stacking instruction (16) specifying a scheme in which a stacking operation is to be performed, characterized in that the stacking instruction (16) comprises:
- a selection information (18) identifying, from among the units (10) on the base plane (12), a set of units to which the stacking operation shall apply;
- a translate command (20) identifying a direction in the base plane (12), in which direction a unit from the set shall be moved translationally in order to be stacked on another unit; and
- orientation information (22) specifying an orientation in which the unit (10) that is subject to the translational movement shall be stacked on the other unit.

Fig. 1

**Description**

The invention relates to a method of forming a stacking instruction for a process in which a plurality of units, each of which has at least two opposite surfaces that are parallel to each other, are stacked one upon the other, and wherein a position on a base plane is assigned to each unit, the stacking instruction specifying a scheme in which a stacking operation is to be performed.

More particularly, the invention relates to a method of forming a stacking instruction for a finisher in a printing system.

In many Graphics Arts applications such as printing business cards, labels or any kind of print products that are to be printed in large quantities, it is common practice to print a plurality of images with identical or similar content in a one- or two-dimensional array on a common substrate and then to use so-called "Cut & Stack" impositions for controlling a process in which the substrate (an endless web or a large sheet) is cut into sheets each of which carries one of the printed images, and the printed sheets are then stacked one upon the other. Such Cut & Stack impositions may also be used in applications such as variable data printing or job ganging for merging different types of end products with similar characteristics or attributes within a single print job.

The Cut & Stack impositions are contained in a job file that has a standardized format, e.g. a JDF file (Job Definition Format), and the job file is processed in the printing system comprising a printer and a finisher.

If no inline finisher is available in the printing system, it is necessary to transmit the stacking instructions or the combined cutting and stacking instructions to a stand-alone finisher in a format that the finisher is able to interpret and to process. In conventional job file formats, the stacking instructions specify only a relatively rigid scheme for performing the stacking operation.

It is an object of the invention to provide a method of forming a stacking instruction that permits a higher flexibility in determining a stacking scheme and in forming stacks of finished products with a larger variety of configurations.

In order to achieve this object, in the method according to the invention, the stacking instruction comprises:

- selection information identifying, from among the units on the base plane, a set of units to which the stacking operation shall apply;
- a translate command identifying a direction in the base plane, in which direction a unit from the set shall be moved translationally in order to be stacked on another unit; and
- orientation information specifying an orientation in which the unit that is subject to the translational movement shall be stacked on the other unit.

If the units positioned on the base plane form a one-dimensional array extending along an axis x, then the direction identified in the translate command may be either the +x-direction or the -x-direction. The units in the array may be numbered in the +x-direction. Then, when the translate direction is the +x-direction, a sheet n will be stacked on top of a neighboring sheet n+1. Conversely, if the direction is the -x-direction, then the sheet n will be stacked on top of the neighboring sheet on the opposite side, i.e. the sheet n-1. In this way, the translate direction determines the order in which the units will be arranged in the stack. Consequently, the stacking order can be determined by including the translate direction in the stacking instruction.

Similarly, if the units are arranged on the base plane in a two-dimensional array with lines extending in the x-direction and columns extending in a y-direction normal to the x-direction, then the units may be identified by a pair (i, j) of a column index i and a line index j. In that case, the translate command may specify the directions +x, -x, +y and -y, and, for example, the direction "+y" will mean that the unit (i, j) is stacked on top of the unit (i, j+1).

The direction of the translate command may be specified separately for each unit in the array (of course with exception of the unit that will form the bottom of the stack and is therefore not translated at all). Thus, a set to which the stacking operation shall apply will comprise at least two units, namely one unit that will form the bottom of the stack, and another unit that will be stacked thereon. However, the set may also comprise three or more units or even all units in the array. All units of the set that are aligned along the direction specified in the translate command will eventually form a single stack, and the sign (+ or -) of the translation will determine which unit will form the bottom of the stack and which will form the top.

When a unit is stacked on top of another unit in the stacking operation, the orientation information in the stacking instruction determines whether the unit retains its original orientation or whether the orientation is changed. For example, if the units have a rectangular shape, the orientation may be changed by rotating the unit by an angle of 180° about an axis z normal to the base plane. Similarly, if the units are shaped as squares, the orientation may be changed by rotating the unit by an angle of 90°, 180° or 270° about the z-axis. Yet another possibility to change the orientation of a unit is to rotate it by an angle of 180° about an axis that extend in the base plane, which means that the unit is flipped so that the former top side becomes the bottom side and vice versa.

Thus, the various combinations of selection information, orientation information and translate directions in the stacking instruction provide a large variety of options that will influence the final configuration of the stack or stacks being formed.

According to an embodiment the stacking instruction comprises a plurality of translate commands to be executed in successive steps, and selection information for a translate command to be executed in a second or later step comprises, as units, the stacks that have been created in an earlier step.

According to a further embodiment the selection information identifies a set with at least three units that are aligned along an axis (x or y) in the base plane, and the stacking instruction comprises a plurality of translate commands that are to be executed in successive steps and identify a direction along the axis (x or y) along which the units are aligned, each of said translate commands being applicable only to a pair of neighboring units in the set.

More specific optional features of the invention are indicated in the dependent claims.

The invention further relates to a stacking apparatus having a controller that is capable of receiving, interpreting and executing stacking instructions that have been formed in accordance with the method described above.

The stacking instructions may be encoded in various forms, including, for example, electronic files, bar codes printed on banner sheets or clear language instructions printed on banner sheets or displayed on a display.

The invention also relates to a stacking table where the stacking instructions are to be executed manually and which includes a display for communicating the stacking instructions to an operator, e.g. in clear language or by means of symbols or animated sequences.

Embodiment examples will now be described in conjunction with the drawings, wherein:

Fig. 1      shows an example of a simple stacking operation and a corresponding stacking instruction;

Figs. 2 to 6      show further examples of stacking operations and stacking instructions;

Fig. 7      shows a stacking table according to an embodiment of the invention; and

Figs. 8 and 9      are block diagrams of printing systems including printers and stacking apparatus according to embodiments of the invention.

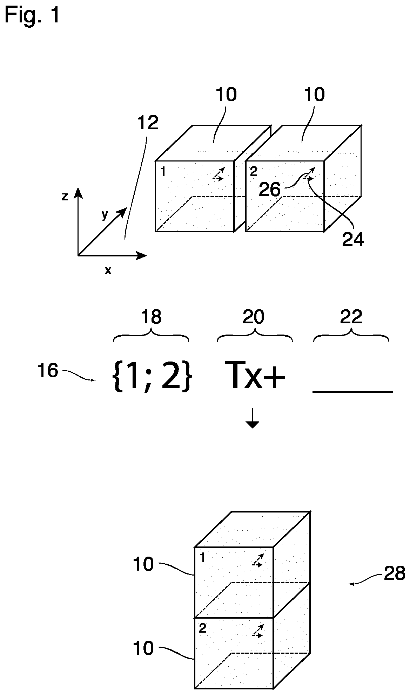

The top part of Fig. 1 illustrates an initial state in which two units 10 are placed on a base plane 12 that the spanned by orthogonal coordinate axes x and y. The units 10 which have symbolically been shown as rectangular boxes may be individual printed sheets or stacks of sheets having a certain height in a direction z orthogonal to the axes x and y. The units 10 are aligned in x-direction so as to form a linear array and have been designated by numbers "1" and "2", which count the position of the unit in +x-direction.

Shown in the middle part of Fig. 1 is a string of symbols that represents a stacking instruction 16. The stacking instruction comprises selection information 18, a translate command 20, and orientation information 22.

The selection information 18 takes the form of a set or subset of the units 10 that are placed on the base plane 10 and to which the stacking instruction shall apply. In the set, the units 10 are represented by their numbers, i.e. "1" and "2" in this example. In a more general case where three or more units 10 are placed on the base plane 12, the selection information may specify a subset of the total ensemble of units 10 that are present on the base plane 12.

The translate command 20 is formed by the symbols "Tx+" in this example, wherein T stands for "translation", x indicates the coordinate axis (x or y) along which the translation shall be carried out, and the sign "+" or "-" indicates whether the unit 10 to which the translation applies shall be moved in +x-direction or -x-direction.

The orientation information 22 is blank in this example, which means that the original orientation which the units 10 have in the initial state (top part of Fig. 1) shall not be changed. It will be understood that each of the units 10 is placed on the base plane 12 in a certain orientation which will be designated as "default orientation" and is symbolized by a short arrow 24 pointing in +x-direction, and a longer arrow 26 pointing in +y-direction. If the orientation of a unit 10 is to be changed, as will be shown in examples described later, this will be represented by a change in the orientation of the arrows 24 and 26.

In the notation that has been used in this example, the set specified by the selection information 18 includes also the one of the units 10 that will form the bottom of the stack to be formed in the stacking operation. This unit, although it is involved in the stacking operation and will form part of the stack, is not subject to any translation, because it will keep its position on the base plane 12, whereas all the outer units are moved in order to be stacked onto this one unit.

As for the unit designated by the number "1" in Fig. 1, the translate command Tx+ means that this unit shall perform a translational movement in +x-direction in order to be stacked on top of the other unit having the number "2", as has been illustrated in the bottom part of Fig. 1. In this way, a stack 28 is formed which consists of the units 10 that have been designated in the selection information 18.

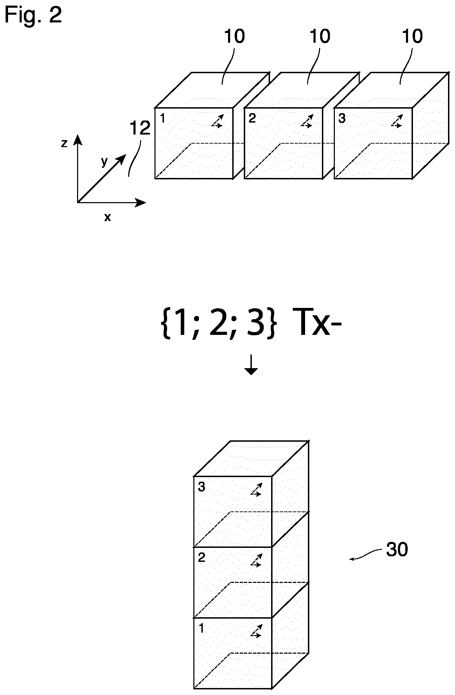

Fig. 2 shows another example wherein three units 10 have initially been placed on the base plane 12, again in the form of a linear array extending along the x-axis. In this example, the set {1; 2; 3} specified in the selection information comprises all three units with numbers 1-3, and the symbol "Tx-" of the translate command means that the translations shall be made in the -x-direction. This means that the unit "3" shall be moved to the left in order to be placed on the unit "2", and then units "2" and "3", together, shall be moved to the left in order to be stacked on top of the unit "1" which will in this case form the bottom of a stack 30, as shown in the bottom part of Fig. 2.

Comparing the stacks 28 and 30 in Figs. 1 and 2, it can be seen that the order of the units is reversed. This is due to the different directions (+ and -) specified in the translate command.

It will be observed that there are two different ways of executing the stacking instruction that has been shown in Fig. 1. One way is to first stack the unit "3" on top of the unit "2" and then to stack the composite unit which is formed by the units "3" and "2" (and may also be designated by the number "3" of its bottom unit) on top of unit "1". Another way is to first stack unit "2" on top of unit "1" and then to stack unit "3" on top of the units "1" and "2". The result, i.e. the stack 30, is the same, so that the stacking instruction does not have to specify the sequence in which the sub-steps are performed.

If desired, it is possible, however, to specify the sequence of the sub steps. This can be done by breaking down the stacking instruction shown in Fig. 2 into a "product" of two more elementary stacking instructions.

For example:

$$\{1; 2; 3\}\,Tx\text{-} \quad \text{->} \quad \{1; 2\}\,Tx\text{-}\,\{2; 3\}\,Tx\text{-}.$$

By convention, the elementary stacking instructions shall be executed in the order from right to left. Thus, the stacking instruction {2; 3} Tx- would be performed first, and the instruction {1; 2} Tx- (wherein "2" now designates the composite unit comprising the stacked units "2" and "3") is performed second.

The alternative sequence of sub-steps would be represented by the product:

$$\{2; 3\}\,Tx\text{-}\,\{1; 2\}\,Tx\text{-}$$

As long as the array of units 10 is linear, the "product" as defined above is commutative, i.e. the resulting stack 30 has always the same configuration.

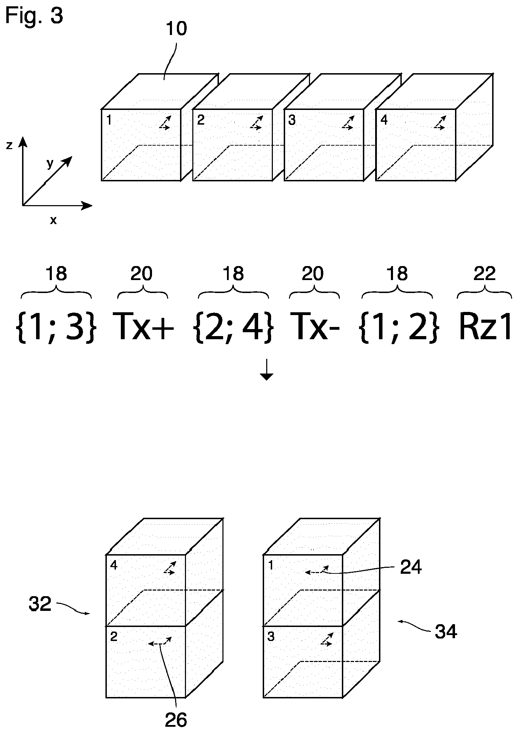

Fig. 3 shows an example in which four units 10, designated by their numbers 1-4, are aligned along the x-axis, and the stacking operation to be performed is a product of three more elementary operations comprising (from right to left in the string shown in the middle part of Fig. 3): a rotation "{1; 2} Rz1", a translation "{2; 4} Tx-", and another translation "{1;3} Tx+".

The instruction for the rotation includes the orientation information "Rz1" wherein R stands for "rotation", z indicates the axis about which the unit shall be rotated (the z-axis), and "1" indicates the rotation angle.

In this example, as in many practical applications, it is required that, if the units 10 are stacked in different orientations, the orientations shall be such that all four lateral sides of the units are flush with each other in the stack. If the footprint of the units on the base plane 12 is rectangular, this means that the only possible rotations about the z-axis are rotations by 0° (default) or 180°. In the present example, however, the units 10 are shaped as squares, so that the higher symmetry permits also rotations by an angle of 90° or 270°. Thus, by convention, Rz1 means a rotation about the z-axis in counter clock sense by an angle of 90°. Rz2 would designate a rotation by an angle of 180°, which can be obtained by "squaring" the rotation Rz1. Analogously, Rz3 designates a rotation by an angle of 270°, and a blank in the orientation information 22 indicates that no rotation shall be made so that the initial orientation of the unit will be preserved.

This notation for the rotation instructions can be extended to units which have any kind of rotational symmetry, such as regular triangles, hexagons, octagons and the like. The available rotations would be constituted by the symmetry group of the shape of the units. Thus, for example in case of a hexagon, "Rz1" would designate a rotation about 60° "Rz2" a rotation about 120° and so on.

The selection information {1; 2} in the rotation command specifies that the rotation, i.e. the change of orientation, shall apply to the units "1" and "2". Consequently, as is shown in the bottom part of Fig. 3, the units "1" and "2" have been rotated by 90°, so that the shorter arrow 24 now points in the positive y-direction and the longer arrow 26 points in the negative x-direction. In contrast, the orientation of the units "3" and "4" has not been changed.

The first translate command "{2; 4} Tx-" means that unit "4" is stacked on top of unit "2" so as to form a stack 32. Similarly, the translate command "{1; 3} Tx+" means that unit "1" is stacked on top of unit "3" so as to form another stack 34.

It is noted that the instruction "{1; 2} Rz1" as such is not a stacking instruction in the proper sense of the word, because the units "1" and "2" are not stacked in this operation but are just rotated. However, this rotate command can be considered as part of the stacking instructions leading to the stacks 32 and 34. In other words, the notation given in Fig. 3 is just a shorthand of:

$$\{1; 3\}\,Tx+\,\{1\}\,Rz1 \quad \{2;4\}\,Tx\text{-}\,\{2\}\,Rz1.$$

In this (less compact) notation, we have two stacking instructions each with selection information, a translate command and orientation information.

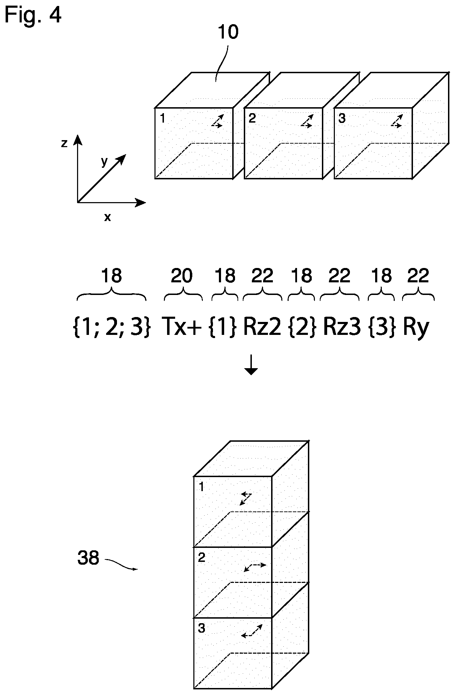

Fig. 4 illustrates an example where three units 10, numbered as 1-3, are stacked to form a single stack 38 in which each unit has a different orientation. Here, the orientation information 22 comprises a flip command Ry to be applied only to unit "3", a rotate command Rz3 to be applied only to unit "2" and a rotate command Rz2 to be applied only to unit "1".

The flip command Ry specifies a 180° rotation about the axis y. The result is shown in the bottom part of Fig. 4 where, in the unit "3", the longer arrow still points in +y-direction as in the default orientation, but the shorter arrow now points in -x-direction. In other words, the unit "3" has been flipped or turned upside down.

As can further be seen in the stack 38, the unit "2" has been rotated about the z-axis by 270° and the unit "1" has been rotated about the z-axis by 180°.

The translate command 20 "Tx+" is applied to all three units, so that the single stack 38 is formed.

The rotate commands that specify rotations about the z-axis commute, because they form a cyclic group, i.e. the symmetry group of a square. However, the flip command Ry does not commute with the rotations about the z-axis. It is therefore convenient to define, by convention, a certain order in which the commands are to be executed. In this example, the flip command is executed first and then the rotate commands are performed. The translate command is always the last to be performed, because once the units have been translated and stacked, it would be difficult to rotate or flip the lower units in the stack.

The square-shaped units 10 shown in this example can only assume one of eight different orientations, namely the default orientation plus three rotations, and each of these four may or may not be flipped, so that the number has to be multiplied. All these eight orientations can be obtained by suitable combinations of the four rotations Rz1, Rz2, Rz3 and "default" with or without flip command Ry. Thus, although it would be possible to define also rotate commands for rotations about the x-axis, it is sufficient and most convenient to define only the rotate and flip commands described above for defining the orientation of the unit.

In other applications, where the units 10 are shaped as cubes, for example, the rotate commands may comprise the entire symmetry group of a cube.

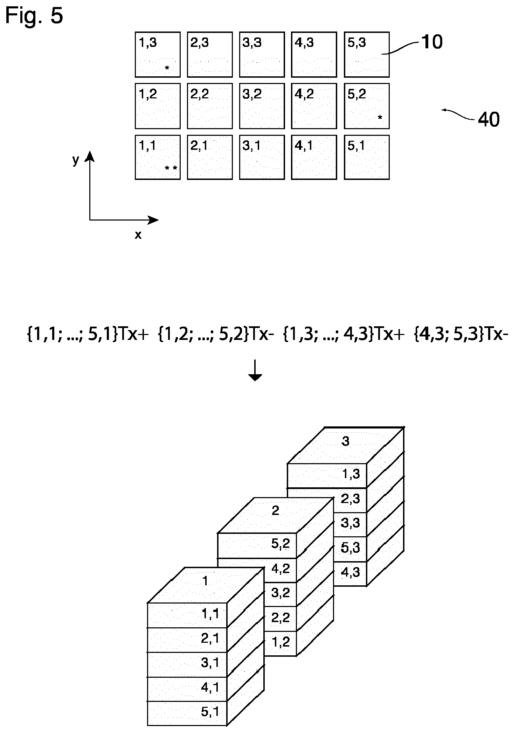

While the units 10 constituted a linear array in the examples that have been described so far, Fig. 5 illustrates an example wherein the units 10 are initially placed on the base plane (x, y-plane) in the form of a two-dimensional array 40 with columns extending in y-direction and designated by a column index i (i = 1 ... 5 in this example) and lines extending in x-direction and designated by a line index j (j = 1, 2, 3 in this example). Each unit 10 can therefore be identified by a pair (i, j) designating its column index and line index. By convention, the column index increases in positive x-direction and the line index increases in positive y-direction.

As is shown in the bottom part of Fig., 5, these units shall be stacked to form three separate stacks designated by stack numbers 1-3, with stack "1" containing all units with line index j = 1, stack "2" containing all units with line index j = 2 and stack "3" containing all units with line index j = 3. However, the stacking orders are different for the different stacks. In stack "1", the column index i increases from top to bottom. In stack "2", the column index i decreases from top to bottom. In stack "3" the units are arranged such that the sequence of column indices from top to bottom is 1-2-3-5-4.

For simplicity, it shall be assumed here that the default orientation is retained.

The stacking instructions for forming the stacks in this way have been given in the middle part of Fig. 5.

A first translate command Tx- applies only to the units "4, 3" and "5,3" and has the effect that, in line No. 3, the fifth unit "5,3" is stacked on top of the fourth unit "4,3".

A second translate command Tx+ applies to the remaining units of the third line and to the composite unit that has been formed in the first step and is now designated by its bottom unit "4,3". This translate command has the effect that the units "1, 3" - "3,3" are stacked in that order on top of the stack comprising the units "5, 3" and "4, 3". >In this way, the stack "3" is formed.

A third translate command Tx- applies to all units of the second line and creates the stack "2", and a last translate command Tx+ applies to the units in the first line results in the stack "1".

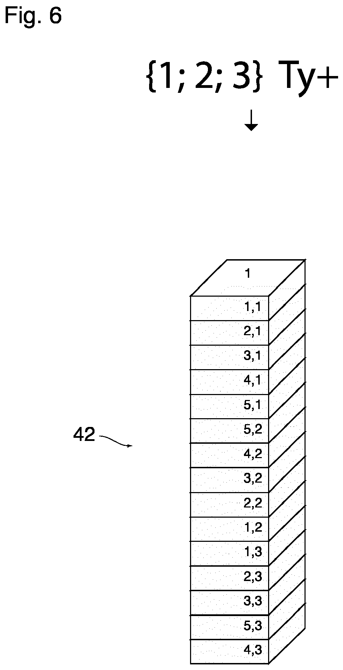

The stacks 1-3 shown in the bottom part of Fig. 5 can again be considered as "units" of a higher level, so that the result of the stacking operations shown in Fig. 5 is again a linear array of units 1-3 (extending in y-direction). In a further step, illustrated in Fig. 6, these units shall now be stacked one upon the other to form a single stack 42 with the higher level unit "1" on top and higher level unit "3" at the bottom. The corresponding stacking instruction {1; 2; 3 Ty+} is shown in Fig. 6. The symbol "y+" in the translate command designates a translation in +y-direction.

Starting with the initial condition shown in the top part of Fig. 5, another example of a stacking instruction could be:

$$\{all\} \ Ty-$$

wherein {all} designates the entire set of all 15 units. The result would be a linear array of five stacks. The first stack would comprise - from top to bottom - the units 1,3 - 1,2 - 1,1. The second stack would comprise the units 2,3 - 2,2 - 2,1, and so on.

It should be observed, however the translate commands Tx+ and Tx- do not commute with the translate commands Ty+ and Ty-. Thus, for example,

$$\{all\} \ Tx+ \ \{all\} \ Ty+$$

has not the same result as

$$\{all\} \ Ty+ \ \{all\} \ Tx+$$

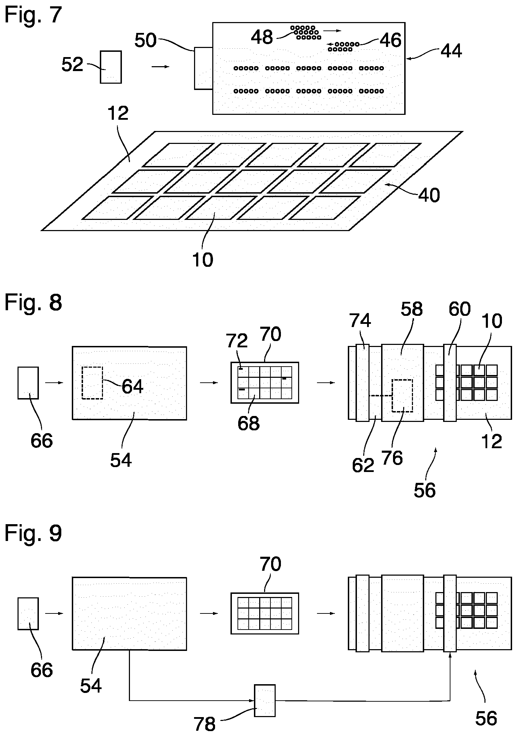

When the stacking operations that are specified by stacking instructions of the type described above are to be performed manually by an operator, it is desirable to dispose of an output device which can present the stacking instructions to the operator in an intuitive way. As an example, Fig. 7 shows a stacking table the top surface of which is formed by the base plane 12, with the same two-dimensional array 40 of units 10 as in Fig. 5 placed thereon. As output device, an LED display panel 44 has been installed on the rear edge of the stacking table. It can be assumed by way of example that the entire surface area of the panel 44 is covered by a matrix of LEDs, Fig. 7 showing only those LEDs that are lit at the present instant. The lower two lines of LEDs that are lit on the panel 44 symbolize the units "1,3" to "5,3" and "1,2" to "5,2" which are supported on the base plane 12 and are not moved at the present instant. The LEDs in the top part of the panel are switched on and off at suitable timings in order to animate the movements of the units in the first line (j = 1) of the array during the stacking operation specified by the instructions {4,3; 5,3} Tx- and {1,3; ...; 4,3} Tx+ (see Fig. 5). An LED line 46 is controlled to animate the translational movement of the unit "5,3" towards and above the unit "4,3", and LED lines 48 are controlled to animate the movement of the stack of units "1,3" - "3,3" towards the position of the unit "4,3".

Thus, the operator simply has to copy the movements shown on the LED panel 44 with the real units 10 on the base plane 12 in order to execute the stacking instructions.

As an alternative, the LED panel 44 could be replaced by a video screen or an optical head-mounted display (OHMD) on which the stacking operations are animated.

The video screen or LED panel 44 is controlled by a controller 50 which receives the stacking instructions to be animated in the form of an electronic file 52, e.g. on a memory stick or via a network. The controller 50 is programmed to read and interpret the stacking instructions and to control the LED panel 44 accordingly.

In another embodiment, the stacking operations may be automated. As an example, Fig. 8 schematically shows a printing system comprising a printer 54 and a finisher 56. The finisher 56 comprises a cutter 58 and a stacking apparatus having a manipulator 60 disposed above a conveyer 62. The top surface of a downstream part of the conveyer 62, in the working range of the manipulator 60, forms the base plane 12 on which the units 10 may be placed.

A controller 64 of the printer 54 receives a print job 66 in the form of an electronic file which specifies, in any suitable format, not only the image contents to be printed but also the intended configuration of the stacked sheets or units to be obtained as the end product at the output of the finisher 56. The controller 64 analyses the job file and prints images 68 that are to appear on the units 10, side by side on a large format substrate 70. The controller 64 also determines a one- or two-dimensional array in which the images 68 are to be arranged in order to make optimal use of the space available on the substrate 70. The printer 54 may print a plurality of substrates 70 with identical or similar image contents, but with all images 68 fitting in the same array. The substrates 70 with the images 68 printed thereon are stacked, and the stack of substrates is transferred to the finisher 56 where the stack is conveyed to the cutter 58. The cutter 58 slits the stack of substrates 70 along cut lines that extend in transport direction of the conveyer 62 and further cuts the stack of substrates along cut lines extending in transverse direction, thereby to separate the substrates 70 into the units 10 which have the images 68 printed thereon. The array of units 10 is then conveyed to the stacking apparatus which manipulates the units 10 in accordance with the stacking instructions.

If the configuration of the array in which the units 10 will be arranged on the base plane 12 in the finisher, the stacking instructions may be formed in accordance with the methods described above already at the time when the job file 66 is created. Otherwise, it is the controller 64 of the printer that determines the configuration of the array of the images 68 and accordingly of the units 10, the stacking instructions are generated in accordance with the principles of the invention within the controller 64 of the printer.

If the images 68 and the corresponding unit 10 have a rectangular shape, an optimal nesting of the images 68 on the substrate 70 may require that some images are printed in landscape format and others in portrait format. Then, the stacking instructions created by the controller 64 may comprise rotate commands with 90° rotations in order to align the units that are stacked one upon the other.

In the example shown in Fig. 8, the stacking instructions read or created by the controller 64 are encoded in the form of bar codes 72 which are printed on a banner sheet that is placed on top of the stack substrates 70.

The finisher 56 has a scanner 74 provided at the input side of the conveyer 62 for scanning the banner sheet and reading the bar codes 72. The bar codes will then be decoded in a controller 76 of the finisher in order to retrieve the stacking instructions which will then be used for controlling the manipulator 60. It will be understood that the banner sheet with the bar codes 72 remains on the top of the stack of the substrates 70 and will be separated into smaller banner sheets for the individual units 10 in the cutter 58.

In the example shown in Fig. 5, the units 10 for which a banner sheet with the stacking instructions should be printed have been marked by an asterisk (*). The stacking instructions may be encoded in the form of a bar code as described above, or in the form of text or symbols to be interpreted by a human reader if the stacking operations are performed manually. Conveniently, separate banner pages are provided for each line of units 10 in the array 40, each banner page containing only the stacking instructions for the pertinent line, i.e. the instructions for forming the stacks 1-3 shown in the bottom part of Fig. 5. Conveniently, the banner sheets are provided on the units "1,1", "5,2" and "1,3" which will form the top of each stack, so that the stacking instructions for each stack are visible on the top of the stack. As a result, the configuration of the stack can be derived from the banner sheet on the top of the stack at any time. For the same reason, the banner sheet for the unit "1,1" carries also the stacking instructions for the entire stack 42 shown in Fig. 6.

Of course, when the banner sheet placed on top of the stack of substrates 70 is cut in the cutter 58, some of the resulting smaller sheets of the size of the units 10 will not bear stacking instructions may be discarded. The banner sheets that bear stacking instructions will remain on their respective stacks until the instructions have been executed and will then be removed as well.

Finally, Fig. 9 illustrates an embodiment example which differs from the example shown in Fig. 8 in that the stacking instructions are not encoded as bar codes 72 but as an electronic file 78 that is transmitted from the printer 54 to the finisher 56.

**Claims**

1. A method of forming a stacking instruction (16) for a process in which a plurality of units (10), each of which has at least two opposite surfaces that are parallel to each other, are stacked one upon the other, and wherein a position on a base plane (12) is assigned to each unit (10), the stacking instruction (16) specifying a scheme in which a stacking operation is to be performed, **characterized in that** the stacking instruction (16) comprises:

  - a selection information (18) identifying, from among the units (10) on the base plane (12), a set of units to which the stacking operation shall apply;
  - a translate command (20) identifying a direction in the base plane (12), in which direction a unit from the set shall be moved translationally in order to be stacked on another unit; and
  - orientation information (22) specifying an orientation in which the unit (10) that is subject to the translational movement shall be stacked on the other unit.

2. The method according to claim 1, wherein the orientation information (22) comprises a rotate command specifying a rotation of the unit (10) about an axis (z) normal to the base plane (12).

3. The method according to claim 2, wherein the units (10) have a common rotational symmetry when seen in a direction normal to the base plane (12), and the rotate command specifies a rotation under which the units are symmetric.

4. The method according to any of the preceding claims, wherein the orientation information (22) comprises a flip command specifying a rotation of the unit about an axis (y) that is parallel to the base plate (12).

5. The method according to any of the claims 2 to 4, wherein the selection information (28) identifies separate sets of units (10) for each translate command, rotate command, and flip command.

6. The method according to any of the preceding claims, wherein the units (10) are arranged on the base plane (12) in a two-dimensional array (40).

7. A stacking apparatus comprising: a support surface (62) for units (10) to be stacked; a manipulator (60) for manipulating the units (10) on the support surface (62) and stacking them one upon the other; and a controller (76) controlling the manipulator (60), **characterized in that** the controller (76) is configured to receive, interpret and execute stacking instructions (16) that have been formed according to a method as specified in any of the claims 1 to 8, with the base plane (12) being the plane of the support surface (62).

8. The stacking apparatus according to claim 7, wherein a scanner (74) is provided for scanning surfaces of the units (10) on which the stacking instructions have been applied in the form of a visible code (72), and the controller (76) is configured to decode the visible codes as scanned by the scanner (74).

9. The stacking apparatus according to claim 7, wherein the controller (76) is configured to receive the scanning instructions in the form of an electronic file (78).

10. A stacking table having a support surface for units (10) to be stacked, **characterized by** a display device (44) and a controller (50) configured to control the display device (44) and to receive and interpret stacking instructions that have been formed in accordance with the method as specified in any of the claims 1 to 6, wherein the base plane (12) is the plane of the support surface, and the controller (50) is configured to translate the scanning instructions into animated images (46, 48) to be displayed on the display device (14).

11. The stacking table according to claim 10, wherein the display device (e4) is an LED panel.

12. A printing system comprising a printer (54) having a controller (64) configured to receive and interpret a print job file (66) specifying images (68) to be applied to a plurality of units (10) and to control the printer (54) to print said images on a number of substrates (70) that are to be cut into said units (10) after the images (68) have been printed, **characterized in that** the controller (64) is configured to identify, in the print job file (66), information that specifies a configuration in which the units (10) to be stacked, and to create, on the basis of that information, stacking instructions (16) in accordance with a method as specified in any of the claims 1 to 6.

13. The printing system according to claim 12, wherein the controller (64) is configured to print the stacking instructions in the form of visible codes (72) on a banner sheet to be superposed on the substrates (70).

14. A software product comprising program code on a machine-readable non-transitory medium, said program code, when loaded into a controller (76) of a stacking apparatus according to any of the claims 7 to 9, causes the controller (76) to read, interpret and execute stacking instructions (16) that have been formed in accordance with a method as specified in any of the claims 1 to 6.

15. A software product comprising program code on a machine-readable non-transitory medium, said program code, when loaded into a controller (64) of a printing system according to claims 12 to 13, causes the controller (64) to read, interpret and execute stacking instructions (16) that have been formed in accordance with a method as specified in any of the claims 1 to 6.

Fig. 1

$16 \rightarrow \{1;2\} \quad Tx+ \quad \underline{\qquad}$

18  20  22

Fig. 2

{1; 2; 3} Tx-

↓

Fig. 3

$$\underbrace{\{1; 3\}}_{18} \quad \underbrace{\text{Tx+}}_{20} \quad \underbrace{\{2; 4\}}_{18} \quad \underbrace{\text{Tx-}}_{20} \quad \underbrace{\{1; 2\}}_{18} \quad \underbrace{\text{Rz1}}_{22}$$

$$\downarrow$$

Fig. 4

{1; 2; 3}  Tx+ {1} Rz2 {2} Rz3 {3} Ry

## Fig. 5

$$\{1,1; ...; 5,1\}Tx+ \quad \{1,2; ...; 5,2\}Tx- \quad \{1,3; ...; 4,3\}Tx+ \quad \{4,3; 5,3\}Tx-$$

Fig. 6

$$\{1; 2; 3\} \; \mathrm{Ty}+$$

↓

42 —→

| |
|---|
| 1 |
| 1,1 |
| 2,1 |
| 3,1 |
| 4,1 |
| 5,1 |
| 5,2 |
| 4,2 |
| 3,2 |
| 2,2 |
| 1,2 |
| 1,3 |
| 2,3 |
| 3,3 |
| 5,3 |
| 4,3 |

Fig. 7

Fig. 8

Fig. 9

Europäisches
Patentamt

European
Patent Office

Office européen
des brevets

**EUROPEAN SEARCH REPORT**

Application Number

EP 18 15 0676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 000 568 A1 (FARHEAP SOLUTIONS INC [US]) 30 March 2016 (2016-03-30) <br> * figures 1,7-10 * <br> * paragraphs [0001] - [0003] * <br> * paragraphs [0020] - [0034] * <br> * paragraphs [0041] - [0057] * <br> ----- | 1-15 | INV. <br> G06F3/12 <br> B65H31/30 |
| X | US 2009/033978 A1 (MORALES JAVIER A [US]) 5 February 2009 (2009-02-05) <br> * figures 1-2, 10A-12 * <br> * paragraphs [0004] - [0009] * <br> * paragraphs [0032] - [0049] * <br> * paragraphs [0073] - [0080] * <br> ----- | 1-15 | |

TECHNICAL FIELDS SEARCHED (IPC)

G06F
B65H
H04N
G06K
B41J

The present search report has been drawn up for all claims

| Place of search | Date of completion of the search | Examiner |
|---|---|---|
| The Hague | 30 May 2018 | Vilella, Josep |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 0676

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2018

| Patent document cited in search report | | Publication date | Patent family member(s) | Publication date |
|---|---|---|---|---|
| EP 3000568 | A1 | 30-03-2016 | EP 3000568 A1<br>JP 6104339 B2<br>JP 2016104505 A<br>US 2016090695 A1 | 30-03-2016<br>29-03-2017<br>09-06-2016<br>31-03-2016 |
| US 2009033978 | A1 | 05-02-2009 | NONE | |

EPO FORM P0459

For more details about this annex : see Official Journal of the European Patent Office, No. 12/82